# EUROPÄISCHE PATENTSCHRIFT

(11) **EP 2 075 404 B1**
(45) Veröffentlichungstag und Bekanntmachung des Hinweises auf die Patenterteilung: **27.02.2013**
(21) Anmeldenummer: 08172673.9
(22) Anmeldetag: 23.12.2008
(51) Int. Cl.: E21D 20/02, B05C 17/005, E04G 23/02, E04F 21/165, F16B 13/14

(54) **Einrichtung zum Einbringen von Mörtel**
Device for applying mortar
Dispositif d'introduction de mortier

(30) Priorität: 27.12.2007 DE 102007063527
(43) Veröffentlichungstag der Anmeldung: 01.07.2009
(73) Patentinhaber: Würth International AG, 7000 Chur (CH)
(72) Erfinder: Wieland, Achim, 74211 Leingarten (DE); Kretzschmar, Markus, 74632 Neuenstein (DE)
(74) Vertreter: Patentanwälte Ruff, Wilhelm, Beier, Dauster & Partner

(56) Entgegenhaltungen:
- EP-A1- 1 065 006
- DE-A1- 4 022 428
- DE-U1- 20 005 805
- DE-U1- 20 120 080

## Beschreibung

Die Erfindung betrifft eine Einrichtung zum Einbringen beziehungsweise Einpressen von Klebstoff, Mörtel oder dergleichen in ein Bohrloch.

Zum nachträglichen Anbringen von Gebäudeteilen an bestehenden Gebäuden ist es erforderlich, Armierungselemente in vorhandene Gebäudeteile, beispielsweise Decken, einzubringen. Hierzu werden Löcher gebohrt, die zum Teil sehr tief sind. In diese Bohrlöcher muss dann Mörtel, Klebstoff oder ein sonstiges abbindendes Material eingebracht werden, in das dann anschließend die Armierungselemente, beispielsweise A-larmierungseisen, eingebracht werden. Es ist daher erforderlich, dass das Bohrloch auch in seinem tiefsten Bereich mit dem Kleber versorgt wird.

Es ist bereits eine Vorrichtung zum Injizieren von Mörtel in ein Bohrloch bekannt, bei der ein Rohr an seinem mit einem Kartuschenausgabegerät zu verbindenden Ende einstückig mit einer im Durchmesser vergrößerten Aufsteckmuffe versehen ist. An dem gegenüberliegenden Ende ist ein Bund verschieblich auf dem Injektionsrohr angebracht.

Weiterhin bekannt ist eine Hilfsvorrichtung zum Befüllen von Bohrlöchern mit Mörtelmassen, bei der an dem in das Innere des Bohrlochs hinein gerichteten Ende des Injektionsrohrs ein Abschlusselement angebracht ist, das mehrere miteinander verbundene Hülsen aufweist. Je nach Durchmesser des Bohrlochs kann die äußere oder eine mittlere Hülse abgetrennt werden, um dadurch eine gewisse Anpassung an den Durchmesser des Bohrlochs zu bewirken.

Bei den Mörtelmassen handelt es sich um mehr oder weniger zähflüssiges Material, zu dessen Durchdrücken durch das Rohr erheblicher Aufwand erforderlich ist, was sich dadurch noch erschwert, dass die Bohrlöcher sehr tief sein können. Die verwendeten Teile der bekannten Vorrichtungen sind in der Regel wegen der anhaftenden Mörtelmassen nur zum einmaligen Gebrauch bestimmt.

Es ist bereits eine Injektionsvorrichtung für das Einpressen von flüssigen Stoffen in Bauwerkskörpern bekannt, die eine Adaptertülle zur Verbindung mit einem Kartuschengerät aufweist. Mit dem Ende der Adaptertülle können alternativ zwei in ihrem Außendurchmesser unterschiedlich ausgebildete Rohre verschraubt werden. Die Rohre haben in ihrem Endbereich eine Rücklaufsperre (DE 4022428 A1).

Weiterhin bekannt ist eine Adapterhülse und einem Parker mit A-dopterhülse, wobei zwei in ihrem Innendurchmesser verschiedene Hülsenabschnitte zur Verlängerung ineinander gesteckt werden können (DE 20005805 U1).

Weiterhin bekannt ist eine Vorrichtung zum Injizieren von Mörtel in ein Bohrloch, die ein Injektionsrohr mit einem am vorderen Ende angeordneten Stauelement aufweist (DE 20120080 U1, EP 1065006 A1).

Der Erfindung liegt die Aufgabe zu Grunde, eine Möglichkeit zum Einpressen von Kleber, Mörtel oder dergleichen in Bohrlöcher zu schaffen, die bei einfachem Aufbau und vielseitiger Verwendung das Behandeln von Bohrlöchern unterschiedlicher Tiefen und/oder unterschiedlichen Durchmessers ermöglicht.

Zur Lösung dieser Aufgabe schlägt die Erfindung eine Einrichtung mit den im Anspruch 1 genannten Merkmalen vor. Die Erfindung schlägt ebenfalls die Verwendung einer solchen Einrichtung zum Verfüllen von Bohrlöchern mit Mörtelmasse, Kleber oder dergleichen vor. Weiterbildungen der Erfindung sind Gegenstand von abhängigen Patentansprüchen.

Die Einrichtung nach der Erfindung enthält also eine Adaptertülle, die an ihrem einen Ende mit einem Kartuschengerät oder einem sonstigen Ausgabegerät für den Mörtel verbunden werden kann. Daran schließt sich ein hülsenförmiger zylindrischer Abschnitt an, mit dessen Ende dann das Rohr verbunden wird. Die Einrichtung enthält mindestens zwei Rohre, von denen eines auf den Endabschnitt der Adaptertülle aufgesteckt und das andere in das Ende der Adaptertülle eingesteckt werden kann. Beide Rohre haben also einen unterschiedlichen Außendurchmesser und einen unterschiedlichen Innendurchmesser. Bei im Durchmesser größeren Bohrlöchern wird das im Durchmesser größere Rohr verwendet, das also außen auf die Adaptertülle aufgesteckt wird. Es ergibt sich damit ein viel geringerer Widerstand beim Einpressen der Mörtelmasse. Das Arbeiten wird also erleichtert, und das Verfüllen des Bohrlochs beschleunigt. Nur dann, wenn das Bohrloch in seinem Durchmesser kleiner ist, wird das kleinere Rohr verwendet.

Das Abschlusselement, dass auf das freie Ende des Rohrs aufgesteckt wird, dient dazu, vom Boden des Bohrlochs ausgehend einen Raum zu schaffen, der zunächst mit Mörtel befüllt wird, und der sich durch Herausschieben des Abschlusselements und des Rohrs vergrößert. Das Abschlusselement wirkt als Kolben, der von der Mörtelmasse nach außen geschoben wird.

Es kann also eine Anpassung an unterschiedliche Durchmesser von Bohrlöchern mit nur einer Adaptertülle erfolgen.

Falls es sich bei dem Kleber beziehungsweise der Mörtelmasse um einen Zweikomponentenkleber handelt, kann erfindungsgemäß die Adaptertülle eine Mischeinrichtung zur Vermischung des Klebers aufweisen.

In ihrem Endbereich zur Verbindung mit den Rohren ist die Adaptertülle als zylindrische Hülse ausgebildet, hat also keine Durchmesserverringerung oder Abstufung ihres Durchmessers.

Erfindungsgemäß ist in Weiterbildung vorgesehen dass eines der beiden Rohre in seinem Außendurchmesser dem Innendurchmesser der Adaptertülle entspricht, während das andere Rohr in seinem Innendurchmesser dem Außendurchmesser der Adaptertülle entspricht. Auch bei den Rohren kann es sich daher um sehr einfache Bauteile handeln, die keine Eingangsmuffe aufweisen müssen. Sie lassen sich daher auch durch Ablängen an die Tiefen der Bohrlöcher anpassen.

In Weiterbildung der Erfindung kann vorgesehen sein, dass das jeweilige,Abschlusselement mit dem vorderen Ende des Rohrs in Ausschieberichtung kraftschlüssig und/oder formschlüssig verbunden ist, wobei es insbesondere mit einer Schulter an der vorderen Stirnfläche des Rohrs angreift. Es kann aber dafür gesorgt werden, dass das Lumen des Rohrs freibleibt, so dass keine Beeinträchtigung des Innenquerschnitts des Rohrs auftritt.

Zur nochmals weiteren Anpassung an unterschiedliche Bohrungsdurchmesser kann die Einrichtung mehrere für jeweils ein Rohr vorgesehen Abschlusselementen aufweisen, die sich in Ihrem Außendurchmesser und/oder ihrer axialen Länge unterscheiden können.

Insbesondere kann das Abschlusselement beziehungsweise jedes Abschlusselement als starrer Block mit einer zylindrischen eine bestimmte Länge aufweisenden Außenseite ausgebildet sein.

Bei besonders tiefen und/oder schmalen Bohrlöchern kann erfindungsgemäß in Weiterbildung vorgesehen sein, dass das Rohr als flexibles Rohr, insbesondere als Schlauch, ausgebildet ist.

Die Erfindung schlägt ebenfalls eine Verwendung mit den in den Verwendungsansprüchen angegebenen Merkmalen vor.

Die Erfindung schafft ein System, das aus einer einzigen Adaptertülle, mehreren in ihrem Durchmesser und ihrer Länge unterschiedlichen Rohren beziehungsweise Schläuchen und mehreren mit den Rohren verbindbaren Abschlusselementen besteht. Die Rohre lassen sich in Anpassung auf unterschiedliche Tiefen der Bohrlöcher auch verkürzen, was aber nicht unbedingt erforderlich ist, da ein zu langes Rohr nur unterschiedlich gehandhabt zu werden braucht.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die verkürzte schematische Seitenansicht einer Einrichtung mit einem ersten Rohr;
- Figur 2: die der Figur 1 entsprechende Darstellung der Einrichtung mit einem anders dimensionierten Rohr;
- Figur 3: in vergrößertem Maßstab einen Schnitt durch das vordere Ende eines Rohrs.

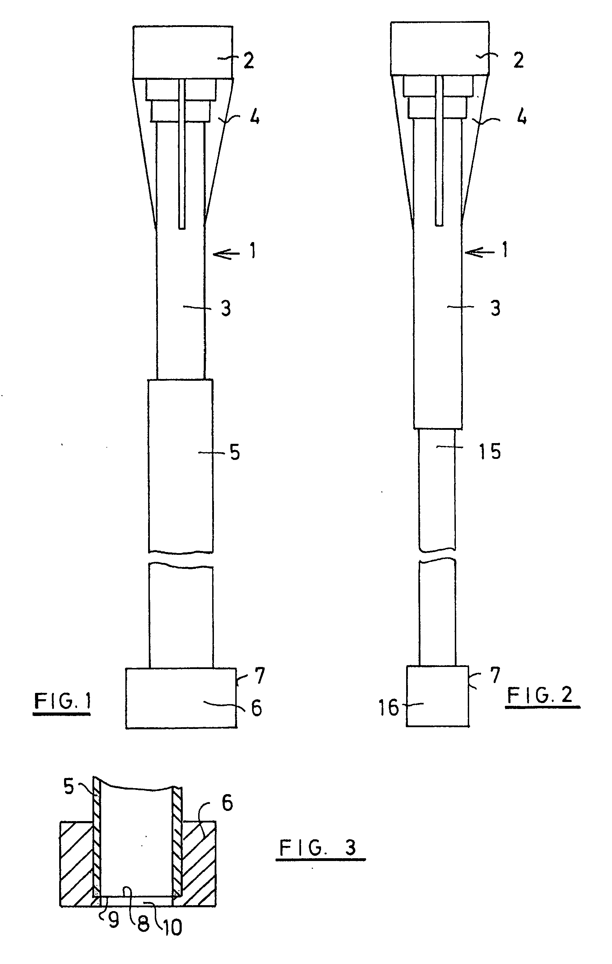

Die in Figur 1 dargestellte Einrichtung zum Einbringen von Mörtel, Kleber oder dergleichen in Bohrlöcher enthält eine Adaptertülle 1, deren eines in Figur 1 oberes Ende 2 zur Verbindung mit einem Gerät ausgebildet ist, mit dessen Hilfe der Kleber, beispielsweise Zweikomponentenkleber, in das Innere der Adaptertülle 1 eingegeben wird. Falls es sich um einen Zweikomponentenkleber handelt, ist im Inneren der Adaptertülle 1 ein Mischer vorhanden, das heißt Leitschaufeln, die so orientiert sind, dass sie eine Vermischung der beiden Komponenten bewirken. Von dem im Durchmesser vergrößerten Ende 2 der Adaptertülle 1 verringert sich der Außendurchmesser der Adaptertülle 1 stufenförmig und geht dann in den Rest der Adaptertülle 1 über, der als zylindrische Hülse 3 ausgebildet ist. Rings um die Adaptertülle 1 ist im Übergangsbereich zu dem im Durchmesser vergrößerten Ende 2 eine Verstärkung in Form von Längsstegen 4 vorgesehen, die dann schräg in die Oberfläche der zylindrischen Hülse 3 übergehen.

Auf das freie Ende der Adaptertülle 1, dass heißt das dem Kartuschengerät abgewandte Ende der Adaptertülle 1, ist ein Rohr 5 aufgeschoben, das dort mit Spannung festgehalten wird. Bei dem Rohr 5 handelt es sich um ein übliches zylindrisches Rohr ohne besondere Form, also ein Rohr, das außen und innen einen konstanten Durchmesser aufweist. Auf das der Adaptertülle 1 abgewandten Ende des Rohrs 5 ist ein Abschlusselement 6 aufgeschoben. Dieses Abschlusselement 6 ist als massiver Block mit einer zylindrischen Außenwand 7 ausgebildet. Die axiale Länge des Abschlusselements 6 ist etwa halb so groß wie sein Durchmesser.

Figur 3 zeigt in vergrößertem Maßstab einen Schnitt durch das Abschlusselement 6. Das Abschlusselement 6 weist eine Stufenbohrung auf, deren größerer Innendurchmesser dem Außendurchmesser des Rohrs 5 entspricht. Am Übergang zu dem kleineren Durchmesser ist eine Stufe 8 gebildet, an der das Abschlusselement 6 auf der Stirnfläche 9 des Rohrs 5 aufliegt. Der im Durchmesser kleinere Teil 10 der Stufenbohrung entspricht in seinem Durchmesser dem Innendurchmesser des Rohrs 5. Dadurch verläuft die Innenwand des Rohrs 5 bündig mit der Bohrung 10. Der Querschnitt des Rohrs 5 wird also an dieser Stelle nicht verringert. Das Abschlusselement 6 ist in Ausschubrichtung, also in Figur 1 bis 3 nach oben, formschlüssig an dem Rohr 5 festgelegt.

Bei der Anordnung, wie sie in Figur 1 und 3 dargestellt ist, wird der Kleber aus der Adaptertülle 1 in das Rohr 5 und von dort in das Bohrloch gepresst. Das Rohr 5 verringert den Querschnitt nicht, so dass sich durch das Rohr 5 und das Abschlusselement 6 der Widerstand nicht wesentlich vergrößert.

In den Fällen, wo das Bohrloch einen kleineren Durchmesser aufweist, so dass das Rohr 5 der Ausführungsform nach Figur 1 nicht mehr verwendet werden kann, kann erfindungsgemäß ein zweites Rohr mit der Adaptertülle 1 verbunden werden, nämlich das Rohr 15 in Figur 2. Dieses Rohr 15, das ebenfalls nicht speziell in seiner Form an die Adaptertülle 1 angepasst zu sein braucht, weist einen Außendurchmesser auf, der dem Innendurchmesser der Adaptertülle 1 entspricht. Dieses Rohr kann also in das freie Ende der Adaptertülle eingeschoben werden, wo es dann durch Klemmung festliegt.

Auf das der Adaptertülle 1 abgewandte Ende des Rohrs 15 wird wiederum ein Abschlusselement 16 aufgesetzt.

Die Abschlusselemente dienen dazu, in dem Bohrloch einen Raum zu begrenzen, in den der Kleber eingefüllt wird. Sie wirken als Kolben und schieben aufgrund ihres Formschlusses mit dem Rohr 5, 15 dieses beim weiteren Einfüllen von Kleber nach außen. Für jedes Rohr 5, 15 kann es mehrere Abschlusselemente 6 beziehungsweise 16 geben, die eine feine Abstufung der Einrichtung an unterschiedliche Bohrlochdurchmesser ermöglichen.

Die Erfindung schafft also ein System zum Einbringen von Mörtel in unterschiedlich tiefe und unterschiedlich enge Bohrlöcher, wobei das System aus einer Adaptertülle einer einzigen Größe und mindestens zwei Rohren unterschiedlichen Durchmessers sowie mindestens zwei Abschlusselementen besteht. Die Rohre können durch Verkürzen an weniger tiefe Bohrlöcher angepasst werden. Zur Anpassung jedes Rohrs an dann noch bestehende Unterschiede in den Bohrlochdurchmessern können unterschiedliche Abschlusselemente 6, 16 verwendet werden.

## Patentansprüche

1. Einrichtung zum Einpressen von Kleber, Mörtel oder dergleichen in ein Bohrloch, mit
1.1 einer einen hülsenförmigen zylindrischen Abschnitt aufweisenden Adaptertülle (1) zur Verbindung mit einem Kartuschengerät,
1.2 mindestens zwei mit dem freien Ende der Adaptertülle (1) verbindbaren Rohren (5, 15),
1.3 von denen ein Rohr (5) einen dem Außendurchmesser der Adaptertülle (1) entsprechenden Innendurchmesser aufweist und auf das freie Ende der Adaptertülle (1) auf steckbar und
1.4 von denen ein Rohr (15) einen dem Innendurchmesser der Adaptertülle (1) entsprechenden Außendurchmesser aufweist und in das freie Ende der Adaptertülle (1) einsteckbar ist, sowie mit
1.5 für jedes Rohr (5, 15) mindestens einem auf dessen freies Ende aufsetzbaren das Rohrende umgebenden Abschlusselement (6, 16).

2. Einrichtung nach Anspruch 1, bei der die Adaptertülle (1) eine Mischeinrichtung zur Vermischung des als Zweikomponentenkleber ausgebildeten Klebers, Mörtels oder dergleichen enthält.

3. Einrichtung nach Anspruch 1 oder 2, bei der die Adaptertülle (1) im Bereich ihrer Verbindung mit jedem der beiden Rohre als zylindrische Hülse (3) ausgebildet ist.

4. Einrichtung nach einem der vorhergehenden Ansprüche, bei der das Abschlusselement (6, 16) an der Stirnseite des Rohrs (5, 15) angreift, das Lumen des Rohrs (5, 15) aber freilässt.

5. Einrichtung nach einem der vorhergehenden Ansprüche, mit mehreren in ihrem Außendurchmesser unterschiedlichen Abschlusselementen (6, 16) für jeweils ein Rohr (5, 15).

6. Einrichtung nach einem der vorhergehenden Ansprüche, bei der das Abschlusselement (6,16) als starrer Block mit einer zylindrischen Außenseite ausgebildet ist.

7. Einrichtung nach einem der vorhergehenden Ansprüche, bei der mindestens ein Rohr flexibel ausgebildet ist, insbesondere als Schlauch.

8. Verwendung einer Einrichtung nach einem der vorhergehenden Ansprüche, wobei je nach Durchmesser des Bohrlochs eines der beiden Rohre mit der Adaptertülle (1) verbunden wird.

9. Verwendung nach Anspruch 8, wobei ein dem Durchmesser des Bohrlochs entsprechendes Rohr mit der Adaptertülle (1) verbunden wird.

10. Verwendung nach Anspruch 8 oder 9, wobei je nach Durchmesser des Bohrlochs ein dem Durchmesser des Bohrlochs entsprechendes Abschlusselement (6, 16) mit dem Rohr (5, 15) verbunden wird.

11. Verwendung nach einem der Ansprüche 8 bis 10, wobei ein der Tiefe des Bohrlochs entsprechendes Rohr (5, 15) mit der Adaptertülle (1) verbunden wird.

## Claims

1. Device for pressing adhesive, mortar or suchlike into a drilled hole with
1.1 an adapter spout (1) having a sleeve-shaped cylindrical section for connecting to a cartridge device
1.2 at least two pipes (5, 15) which can be connected to the free end of the adapter spout (1),
1.3 of which one pipe (5) has an internal diameter corresponding to the external diameter of the adapter spout (1) and can be fitted onto the free end of the adapter spout (1),
1.4 and of which one pipe (15) has an external diameter corresponding to the internal diameter of the adapter spout (1) and can be inserted into the free end of the adapter spout (1), as well as with
1.5 a closing element (6, 16) which can fitted onto the free end of each pipe (5, 15) and surrounds the pipe end.

2. Device according to claim 1 in which the adapter spout (1) contains a mixing device for mixing the adhesive, mortar or suchlike formed of dual-component adhesive.

3. Device according to claim 1 or 2 in which the adapter spout (1) is designed as a cylindrical sleeve (3) in the area where it connects to each of the two pipes.

4. Device according to any one of the preceding claims in which the closure element (6, 16) is in contact with the face surface of the pipe (5, 15) but leaves the lumen of the pipe (5, 15) clear.

5. Device according to any one of the preceding claims with several different closure elements (6, 16) in its external diameter each for one pipe (5, 15).

6. Device according to any one of the preceding claims in which the closure element (6, 16) is designed as a rigid block with a cylindrical outer side.

7. Device according to any one of the preceding claims in which at least one pipe is flexibly designed, more particularly as a hose.

8. Use of a device according to any one of the preceding claims whereby depending on the diameter of the drilled hole one of the two pipes is connected to the adapter spout (1).

9. Use according to claim 8 whereby a pipe corresponding to the diameter of the drilled hole is connected to the adapter spout (1).

10. Use according to claim 8 or 9 whereby depending on the diameter of the drilled hole, a closure element (6, 16) corresponding with the diameter of drilled hole is connected to the pipe (5, 15).

11. Use according to any one of claims 8 to 10 whereby a pipe (5, 15) corresponding with the depth of the drilled hole is connected to the adapter spout (1).

## Revendications

1. Dispositif pour le pressage d'une colle, de mortier ou autres dans un trou percé, avec
1.1 une douille d'adaptateur (1) comportant une partie cylindrique en forme de douille, pour le raccordement à un appareil à cartouche,
1.2 au moins deux tuyaux (5, 15) reliables à l'extrémité libre de la douille d'adaptateur (1),
1.3 parmi lesquels un tuyau (5) présente un diamètre intérieur correspondant au diamètre extérieur de la douille d'adaptateur (1) et peut être enfoncé sur l'extrémité libre de la douille d'adaptateur (1), et
1.4 parmi lesquels un tuyau (15) présente un diamètre extérieur correspondant au diamètre intérieur de la douille d'adaptateur (1) et peut être introduit dans l'extrémité libre de la douille d'adaptateur (1), et avec
1.5 au moins un élément terminal (6, 16) pour chaque tuyau (5, 15), entourant l'extrémité de tuyau et apte à être disposé sur l'extrémité libre de celui-ci.

2. Dispositif selon la revendication 1, dans lequel la douille d'adaptateur (1) contient un dispositif de mélange, pour mélanger la colle conçue comme une colle à deux composants, le mortier ou autres.

3. Dispositif selon la revendication 1 ou 2, dans lequel la douille d'adaptateur (1) est conçue comme un manchon cylindrique (3) dans la région de son assemblage avec chacun des deux tuyaux.

4. Dispositif selon l'une des revendications précédentes, dans lequel l'élément terminal (6, 16) bute contre la face frontale du tuyau (5, 15), mais en laissant libre la lumière du tuyau (5, 15).

5. Dispositif selon l'une des revendications précédentes, avec plusieurs éléments terminaux (6, 16), différents quant à leur diamètre extérieur, pour un tuyau respectif (5, 15).

6. Dispositif selon l'une des revendications précédentes, dans lequel l'élément terminal (6, 16) est conçu comme un bloc fixe, avec un côté extérieur cylindrique.

7. Dispositif selon l'une des revendications précédentes, dans lequel au moins un tuyau est conçu souple, en particulier comme un tube souple.

8. Utilisation d'un dispositif selon l'une des revendications précédentes, dans lequel l'un des deux tuyaux est relié à la douille d'adaptateur (1), en fonction du diamètre du trou percé.

9. Utilisation selon la revendication 8, dans laquelle un tuyau correspondant au diamètre du trou percé est relié à la douille d'adaptateur (1).

10. Utilisation selon la revendication 8 ou 9, dans laquelle un élément terminal (6, 16) correspondant au diamètre du trou percé est relié au tuyau (5, 15), en fonction du diamètre du trou percé.

11. Utilisation selon l'une des revendications 8 à 10, dans laquelle un tuyau (5, 15) correspondant à la profondeur du trou percé est relié à la douille d'adaptateur (1).
